Europäisches Patentamt

European Patent Office

Office européen des brevets

(19)

(11) Publication number: **0 322 314**
**A2**

(12) **EUROPEAN PATENT APPLICATION**

(21) Application number: **88403272.3**

(22) Date of filing: **21.12.88**

(51) Int. Cl.⁴: **G 01 B 11/00**
G 01 B 11/02, G 01 B 11/24

(30) Priority: **21.12.87 AU 6094/87**

(43) Date of publication of application:
**28.06.89 Bulletin 89/26**

(84) Designated Contracting States: **DE FR GB SE**

(71) Applicant: **THE UNIVERSITY OF WESTERN AUSTRALIA**
**Nedlands Western Australia 6009 (AU)**

(72) Inventor: **Kovesi, Peter Dominic Depart. of Mechanical**
**Eng.**
**University of Western Australia**
**Nedlands Western Australia 6009 (AU)**

**Baranski, Jan Depart. of Mechanical Engineering**
**University of Western Australia**
**Nedlands Western Australia 6009 (AU)**

(74) Representative: **Fruchard, Guy et al**
**CABINET BOETTCHER 23, rue la Boétie**
**F-75008 Paris (FR)**

(54) **Vision system.**

(57) A system for estimating the size and/or shape and/or position of an object such as a sheep mounted on a restraining means comprising a pair of video cameras and adjacent light sources, a multiplicity of elements of highly directional retro-reflective material attached to predetermined portions of said restraining means, a video digitizer board for digitizing the image received by each of said video cameras, an associated computer for storing the digitized image, said computer being programmed to search the stored digitized image to locate the bright spots created by said retro-reflective markers, following which the digitized image is search to locate changes in intensity in the image indicating the location of the edges of the sheep.

_Fig. 1._

EP 0 322 314 A2

**Description**

## VISION SYSTEM

Field of the Invention:

This invention relates to vision systems for use with automated systems in which the size and/or shape and/or position of an object is required to be assessed before automated operations are commenced.

Background of the Invention:

The automated shearing of sheep has been the subject of much research in recent years. In any fully automated system for shearing sheep, it will be essential to assess the size and shape of the sheep so that the automated system may select or generate the most suitable model on which a shearing program is to be based. It will be appreciated that sheep change size and shape with in and between breeds and it is not possible to count on all sheep in a particular mob to be sheared to be about the same size and shape. Accordingly, each sheep to be shorn by an automated system must have a number of predetermined measurements taken before the most suitable shearing program may be selected or generated for implementation. The automated shearing system presently being developed by the applicant presently relies on a number of measurements being taken manually for subsequent input into the computer which controls the shearing operation. Of course this would be unacceptable in any practical automated sheep shearing system.

Summary of Invention and Objects:

It is an object of the present invention to provide a vision system by means of which the size and/or shape and/or position of an object to be further treated may be assessed.

The invention provides a system for estimating the size and/or shape and/or position of an object comprising at least a first optical system positioned to be aimed at the object from a predetermined direction so as to receive an image of the object from that direction, means for locating one or more bright spots at predetermined positions on or adjacent said object, means for digitizing the image received by said optical system into a predetermined array of intensity values across the image, means for storing the digitized image, and means for searching the stored digitized image to locate said bright spot(s) and then to locate changes in intensity in the image indicating the location of the edges of the object.

In a preferred form of the invention, the system includes a second optical system positioned to receive an image of said object from another direction, preferably from a mutually perpendicular direction, whereby the edges of the image from that direction may also be located.

Where the present invention is applied to the estimation of the size and/or shape of a sheep, the bright spots are preferably located at predetermined positions on the apparatus which is used to restrain the animal. Convenient positions include the clamps for restraining the legs of the animal which serve to define the extremities of the animal and form ideal starting positions for the location of the edge of the animal by means of which the shape and size of the animal may be determined.

The bright spots may be produced by the use of small light sources light emitting diodes or some other light source which is independent of the ambient light. However, one disadvantage with such devices is that they require electrical wiring which may inhibit movement of the items to which they are attached. Also such devices may be easily damaged.

For the above reasons, the bright spots are preferably produced by attaching elements of highly directional retro-reflective material, for example, of the type used for certain types of front projection screens. This material reflects the light from a source located next to the camera, and used to illuminate the sheep or other object directly back towards the camera to define areas which are far brighter than any other areas on or near the animal. The reflected light is very intense because of the minimal scattering caused by the highly directional material. In order to be able to see the reflected light, the light receiver (eye or camera) must be within the conical region with apex on the piece of retro-reflective material in which light is reflected back towards the source.

In the presently preferred embodiment, the retro-reflective material is 3M Scotchlite 7615 which is used for certain types of front projection screens. The light source is a 150w domestic light bulb placed beside the camera. This keeps the camera and light source within a one degree cone. The retro-reflective material appears very bright -saturating the camera picture elements quite readily.

Typically the preferred procedure used to locate the position of such a spot is to scan through a particular region in the image looking for pixels belonging to the spot. The u and v image coordinates of each pixel in the spot are summed, and the average taken to return the centroid of the spot. Thresholding is used to decide whether a pixel is part of the spot or not. The use of retro-reflective material makes the selection of the detection threshold quite simple. A level just below the saturation level will ensure that only parts of the reflective material will be considered to be the spot. In this way insensitivity to ambient lighting conditions is achieved.

Another very important advantage of the preferred system is that it is totally passive, not needing any wires or power to be supplied to the "spots". The spots can be turned on and off simply by turning on or off the light source next to the camera. This is useful if one wants to ensure that the spots will not interfere with other image feature detection processes that may be used. The spots are reasonably durable, cheap, and very easily installed.

It will be appreciated from the above that the high retro-reflectivity of the material marking the spots is highly preferred for these reasons:

1. Only light emanating from a source next to the camera will be reflected back from the spots to the camera. Light from other sources will have no effect, making the system insensitive to variations in the ambient light.

2. The light is reflected back towards the source in a very narrow cone, rather than being spread everywhere. Therefore, the reflected light is quite intense. This means that only a modest light source is needed next to the camera to make the spots appear very bright. This has the advantage of convenience, low bulk and low cost. In addition, it means that the overall illumination of the scene is not changed very much, this may be useful if structured lighting is being employed to highlight features.

Brief Description of the Drawings:

A presently preferred embodiment of the invention will now be described with reference to the accompanying drawings in which:

Figure 1 is a schematic diagram showing the vision system embodying the present invention;

Figure 2 is a representation of the image coordinate system showing the position and size parameters of an image to be processed by the vision system;

Figure 3 is a schematic diagram of the video digitizer board using in the vision system embodying the invention;

Figure 4 is a schematic diagram illustrating the software arrangement of the vision system embodying the invention;

Figure 5 is a perspective view of a restraining device which may be used in conjunction with the vision system embodying the invention showing the position of calibration points and coordinates for the vision system;

Figure 6 is a schematic representation of one method of locating the silhouette of a sheep by scanning along lines:

Figure 7 is a illustrative graph showing typical intensity values produced a line of pixels of the image being processing;

Figure 8 is a diagram illustrating a simple one dimensional mask used to ascertain the intensity gradient of an image being processed;

Figure 9 shows a typical noisy signal, a smooth signal and the result of convolution respectively, and

Figure 10 is a diagrammatic representation showing the search positions and directions for locating the edges of an image being processed.

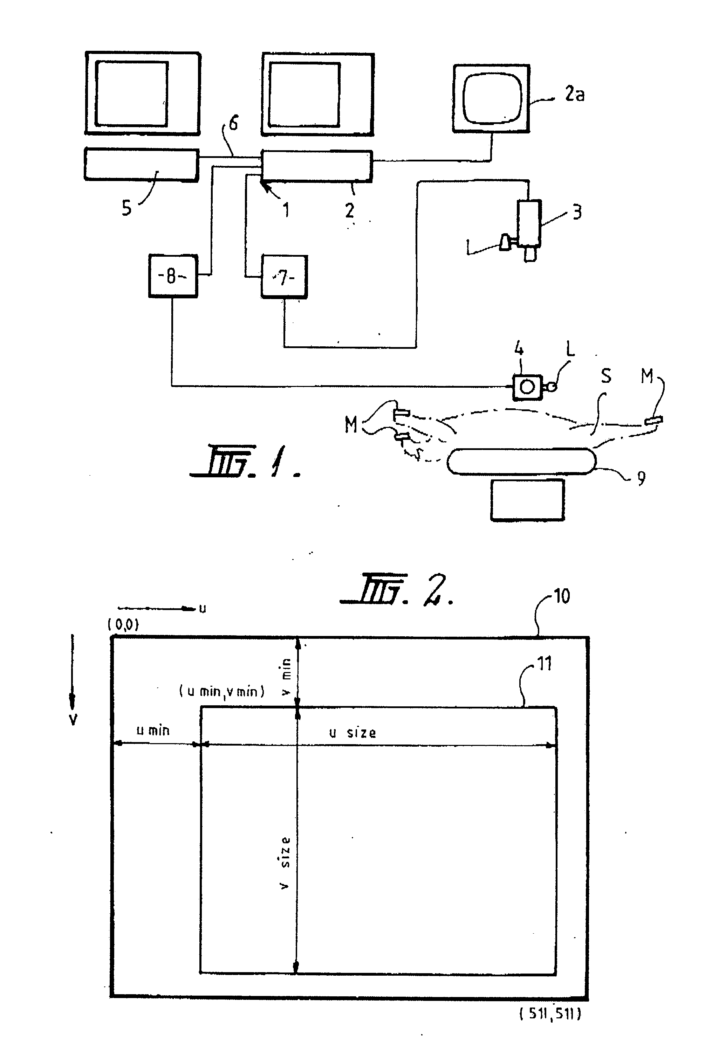

The basic system according to the preferred embodiment is shown schematically in Figure 1. The system is based around a MATROX PIP-1024 Video Digitizer Board 1 (not visible) which is mounted in an expansion slot of an IBM PC XT 2 having an associated display monitor 2a. A video signal from two cameras 3 and 4 is digitized by the board 1 and stored in a frame buffer (not shown). The PC 2 is connected to an HP A900 computer 5 via an RS232 link 6. The cameras 3 and 4 are controlled by the PC 2 via power supplies 7 and 8. The HP 5 controls the vision measurement process, sending commands to the PC 2, the PC 2 then analyses the image and returns the data, which is then used by the HP 5 to predict a sheep surface model of a sheep S positioned on a restraining device 9.

The extremities of the sheep S are identified by highly directional retro-reflective markers M, which are applied to restraining fittings on the device 9, such as leg clamps C and the head clamp (not shown). The markers M reflect light from light sources L located adjacent each camera 3 and 4. Conveniently, the light sources L may be a 150 w domestic light bulb.

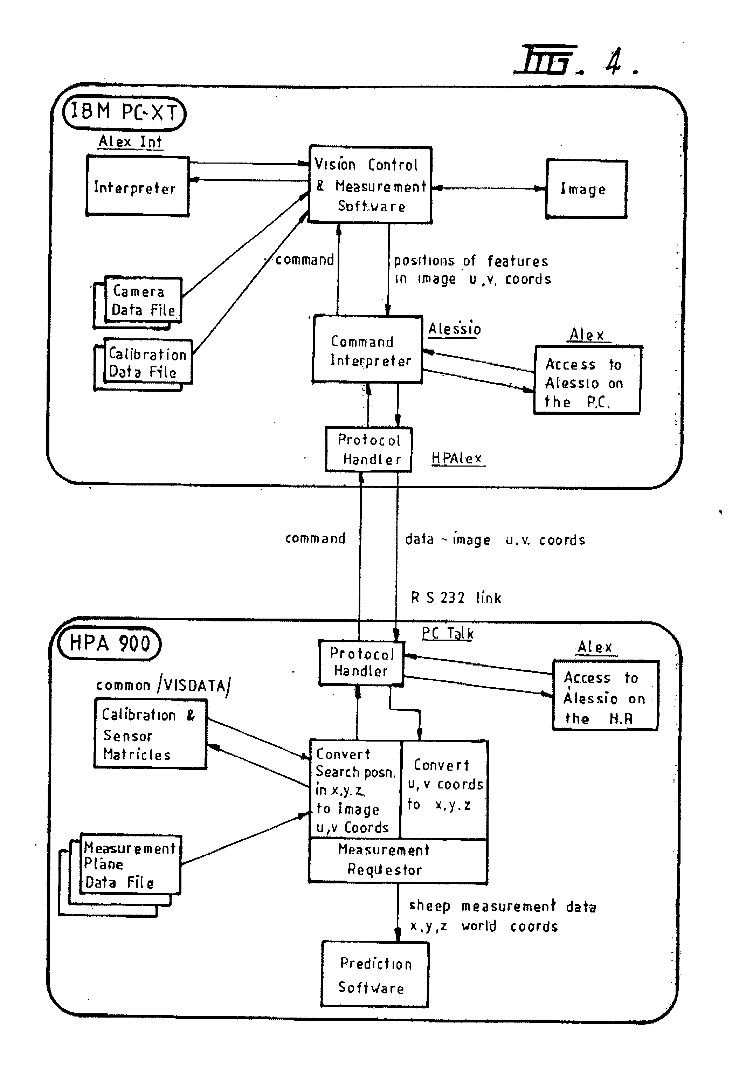

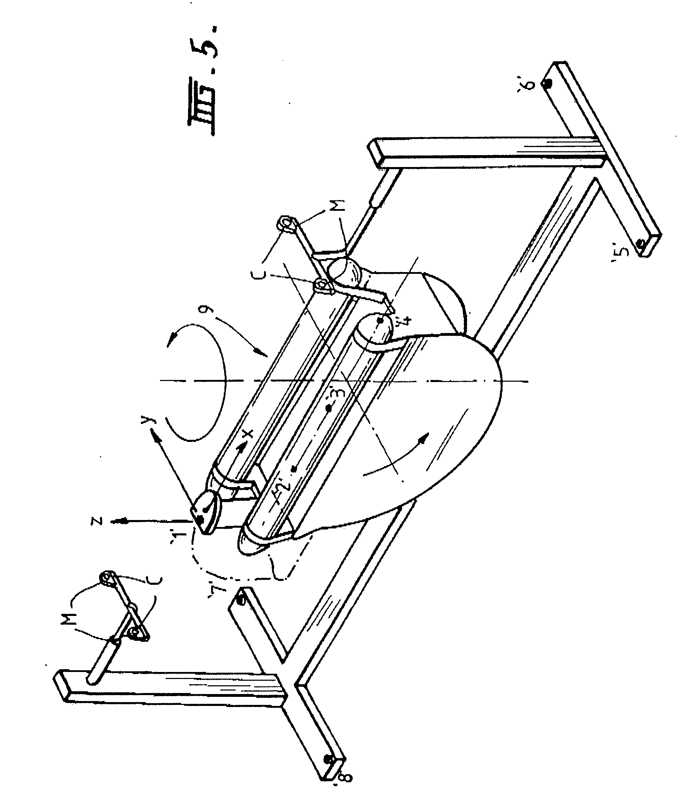

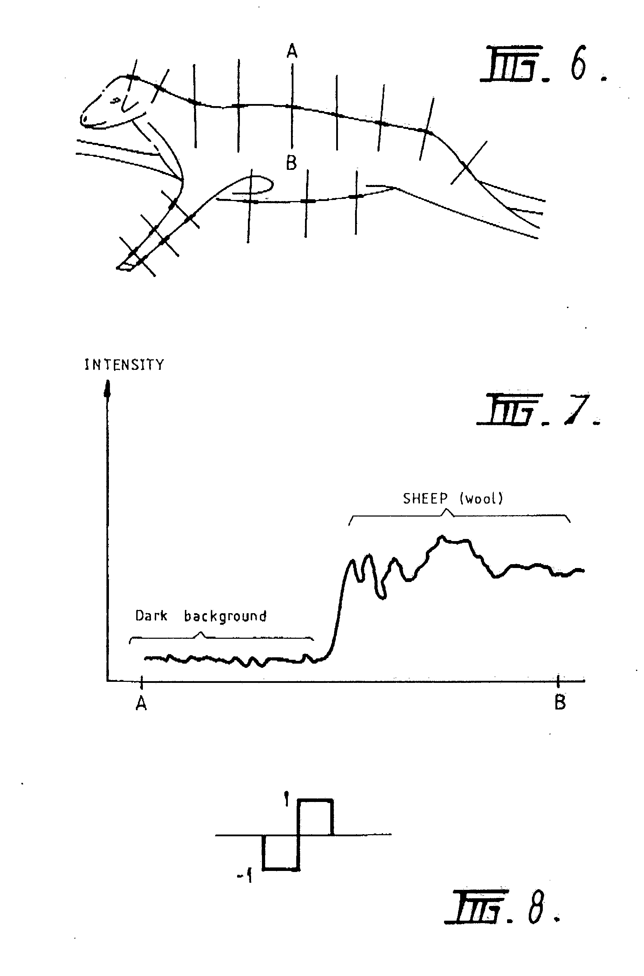

Calibration points, described further below and shown in Fig. 5, are similarly identified by markers M. One suitable retro-reflective material is 3M Scotchlite 7615.

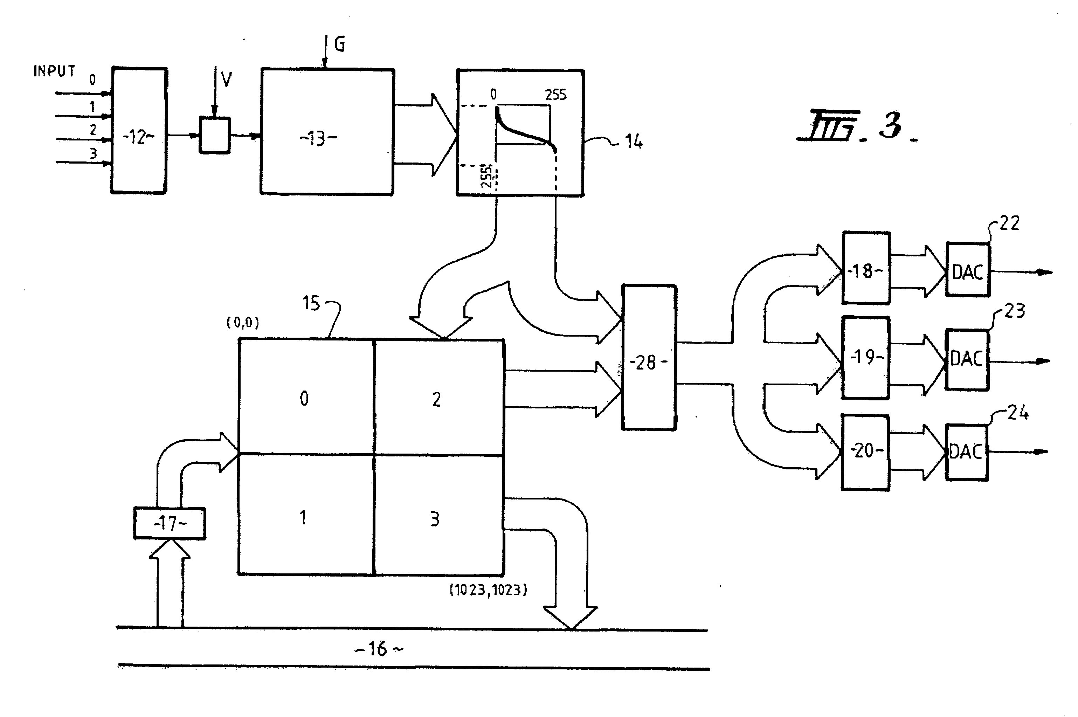

The image that is produced by the digitization is a 512 x 512 array of intensity values across the image. Point (0,0) is the top left corner and (511,511) is the bottom right. Each array element (pixel) represents the intensity level at that point in the image. The intensity level is some value between 0 and 255. Figure 2.1 shows the image coordinate system and how the position and size parameters of an image are specified. In this Figure, the frame storer boundary is indicated by the reference 10 while the image boundary is indicated by the reference 11.

The PIP-1024 board 1 is shown schematically in Figure 3. There are four input video channels to the board identified by 0, 1, 2 and 3. Channels 0, 1 and 2 can take signals from the cameras 3 and 4 , while channel 3 is an internal feedback channel which allows one to pass an already digitized image back through the board 1. Only one channel can be digitized at a time, and the channel to be digitized is selected by selector 12. Before digitising the image by means of analogue to digital converter 13, an offset voltage V is applied to the signal. This determines the intensity level in the signal that will become black (level 0) in the digitized image. A gain G is then applied which sets the intensity level that will become white (level 255) in the image. Both the offset and the gain are adjustable, and a software routine is available for setting these automatically as described further below.

3

The digitized data then passes through an input lookup table 14. This table allows the operator to map some input intensity level to some other level (both levels must be between 0 and 255). For most applications the input lookup table is set to a ramp, i.e. 0 gets mapped to 0, 1 to 1, 2 to 2, etc. up to 255 to 255. The digitized image is then stored in one of four quadrants of a frame buffer 15. The image can then be transferred into the memory of PC 2 via the bus 16 for image processing. Data can also be written from the PC 2 into the frame buffer 15 (eg. graphics) via mask means 17. The contents of the frame buffer 15 can then be displayed on the graphics monitor 2a. Output look up tables 18, 19 and 20 for the red, green and blue components of the video signal may also be displayed, by the use of keyer 21, and the digitized signal in each case is converted by a digital to analogue converter 22, 23 and 24 and applied to monitor 2a. These are the only features of the board that one need be concerned with.

The system described above is controlled by software which makes use of the PIP-EZ MS-DOS software library supplied with the board 2. The PIP-EZ software package consists of a number of library routines which enable various operations to be done on the board. Some of these include: frame grabbing, hardware control of the board, input and output table manipulation, input and output control to and from the board, graphics routines and some basic vision processing routines. In addition an interpreter is supplied through which these functions can be called. Additional functions written by the user can also be called through an interpreter.

The interpreter is mainly used for exploring ideas and developing software and is called Alex Int. Through the interpreter one can interactively access almost all of the vision processing routines. The interpreter is run in one of two ways depending on whether the camera(s) 3,4 are to be used or not.

C\VISION> alexint init.pip - when you have a camera connected.

or C\VISION> alexint nocam.pip - when you do not.

"init.pip" and "nocam.pip" are command files that the interpreter runs to initialise the system. Various parameters are set, such as specifying the PAL video standard. The only difference between the two files is that one specifies the sync source to be from the camera and the other specifies use of the internal source.

After entering the interpreter the system comes back with a prompt ">". You can then enter your commands. To exit the system, for example, type >exit.

Some basic useful commands are:

>chan n - select input from channel n (0,1, or 2),

>qno n - select viewing quadrant n (0, 1, 2 or 3),

>snap 1 - snap the camera using the current channel (image is stored in current quadrant).

>cgrab 1 - turn on continuous grab. The image is constantly being refreshed, as distinct from a single snap.

>cgrab 0 - turn off continuous grab.

>getimage filename n - read image from "filename" and display it in quadrant n.

>saveimage n umin vmin usize vsize filename - save image from quadrant n, with size and position specified by umin, vmin, usize and vsize and store it in file "filename".

>dos doscommand - "doscommand" will be executed as an ordinary DOS command.

>exit - stop

The vision measurement system is controlled through subroutine Alessio which runs on the PC 2. A schematic diagram of the software structure is shown in Figure 4.

The source files and their contents are:

ALESSIO.C Command interpreter for vision processing commands.

ALEX. C Interface to Alessio for commands entered on the IBM PC.

HPALEX.C Interface to Alessio for commands sent from the HP A900.

VISLIB1.C Basic hardware control, image memory management and filing.

VISLIB2.C Basic image processing, histogramming, thresholding.

VISLIB3.C Service routines for Alessio.

EDGELIB.C Edge detection routines.

CALIBRATE.C Calibration software

EXPOSURE.C Automatic gain and offset control to obtain good exposure.

GRAFX.C Graphics routines.

VECTOR.C Vector manipulation routines.

MATRIX.C Matrix manipulation routines.

Alessio, the sheep measurement system, can be accessed in a number of ways:

1. One can run program ALEX on the PC 2 which allows one to enter commands from the keyboard. Return values from the vision software is displayed on the screen.

2. One can run program ALEX on the HP 5 (same as the other ALEX but written in FORTRAN). However, one must also run program HPALEX on the PC (you are instructed to do this when you run ALEX). HPALEX handles the PC end of the communication between the two computers. Commands from ALEX are sent to the PC via subroutine PCTalk which controls the HP side of the communication with the PC. The RS232 link 6 is connected to port 6 of the HP multiplexer.

3. One can write one's own program to send commands to Alessio either using direct commands sent via PCTalk, or using a library of subroutines which perform various convenient operations, controlling the necessary communication the PC. These subroutines will be described later.

Commands available in Alessio include:

INITIALISE Initialises the PIP board, and initialises parameters.

CAMERA CameraNo Datafile
CameraNo is 1 or 2. Camera parameters from the datafile are read in and assigned to the relevant camera. A picture is taken to check things out. The data files are text files stored in /VISION on the PC, the usual names are CAMERA1.DAT and CAMERA2.DAT
CALIB CameraNo Param
This command returns the elements of the calibration matrix for the specified camera. If Param is 1 the first 6 elements of the matrix are sent, if Param is 2 the remaining 5 elements are sent (the last element is 1). The reason for this partial transfer of data is that the amount of data that can be sent at a time is limited to 100 characters.
DEBUG on/off
Turn debug mode on or off. In debug mode various commands and information is printed out. This command is mainly of interest for people developing software, not so much the user.
DISPLAY on/off
Turn display of edges and spots found on or off.
SNAPCAMERA CameraNo.
Record on image from camera "CameraNo".

```
EPARM   sigma   EdgeThresh   GO   G255

        (6)       (60)      (40) (0)    typical values.
```

Set edge detection parameters.
Sigma sets the width of the mask that is used to convolve with the image.
EdgeThresh sets a value below which edges are not marked. GO and G255 are edge gain values, GO setting the gain for an edge with mean luminance 0, and G255 setting the gain for an edge with mean luminance 255. Linear interpolation is used for values in between. See edge detection notes for more information. EDGE ustart vstart uend vend U(p)/D(own)
Search for an edge along a line starting from image coords ustart, vstart and ending at uend, vend. A "U" or a "D" is used to specify whether the expected edge is going to be "up" (from dark to light) or "down" (light to dark). The current edge detection parameters are used. The image coordinates of the first edge of magnitude greater than EdgeThresh is returned.
    (150) typical value
set the spot detection threshold to SpotThresh. The "spot" is considered to be the region in the search area that is brighter or darker (depending on whether one is looking for a dark or light spot) than the threshold.
SPOT umin vmin umax vmax B(lack)/W(hite)
Search for a spot within the window specified by image coords umin, vmin, umax, vmax. A "B" or a "W" is used to specify whether the expected spot is going to be a black spot on white or a white spot on black. The current spot detection parameters are used. The image coordinates of the centroid of the spot is returned.
WRITEIMAGE filename
Writes the current image to disc.
READIMAGE filename
Reads image data file and places it in memory. This allows on to test measurement sequences on a stored image.
EXIT
Shuts down the vision system.
    Up to two cameras can be controlled. Each camera has a set of parameters associated with it. These are:
- Input channel No on the PIP vision board. Usually this is set to 1 or 2 to match the camera number, this leaves channel 0 free.
- Gain } levels to be used when digitising the image.
- offset }
- quadrant The default display quadrant on the PIP board for this camera.
- window setting the position and size of the image that is stored in memory.
- calibration matrix for the camera. This is a 3x4 matrix relating world xyz coordinates to image uv coordinates.
    These parameters are kept in camera data files, the usual ones being CAMERA1.DAT and CAMERA2.DAT, an example of such a file showing the format is shown in the following Table.

## TABLE

```
* Camera Data File 3-3-87
* An '*' preceeds a comment, blank lines may be used too exceot after
* 'Calibration Data'

channel    2
gain       120
offset     120
quadrant   0
window     0 75 511 425

Calibration Data
   -234.301519644      5.341968510    -167.201107508    382.105869434
      5.267237042    334.076508149    -179.469449626    284.211963146
      0.010937024      0.007327360      -0.658780559      1.000000000
```

Vision measurement sub-routines are in VISION.FIN and they allow one to work in world coordinates rather than image coordinates when one specifies search areas for features.

To explain these routines one must first explain the use of Calibration and Sensor Matrices. For full information see Bolles et al [1981].

The process of taking an image results in world xyz coordinates being mapped into image uv coordinates. This can be represented mathematically as

$$
\begin{bmatrix} su \\ sv \\ s \end{bmatrix} = \begin{bmatrix} c11 & c12 & c13 & c14 \\ c21 & c22 & c23 & c24 \\ c31 & c32 & c33 & c34 \end{bmatrix} \cdot \begin{bmatrix} x \\ y \\ z \\ 1 \end{bmatrix}
$$

This 3x4 matrix is known as the camera calibration matrix. See the following description on calibration for information on the generation of this matrix. Given this matrix and given an expected position of a feature in the scene in world xyz coordinates one can calculate where one should search for it in the image.

The reverse transformation, given the position of a feature in the image, where it is in world xyz coordinates, is also fairly straight forward if one can provide some convenient constraint regarding the position of the feature. If one knows that the feature of interest lies in some fixed plane, then from the equation of this plane and calibration matrix one can generate a "sensor matrix" which transforms image coordinates to world coordinates.

$$\begin{bmatrix} sx \\ sy \\ sz \\ s \end{bmatrix} = \begin{bmatrix} S11 & S12 & S13 \\ S21 & S22 & S23 \\ S31 & S32 & S33 \\ S41 & S42 & S43 \end{bmatrix} \cdot \begin{bmatrix} u \\ v \\ 1 \end{bmatrix}$$

The subroutines in VISION.FIN have access to a local common block /VISDATA/CurrentCamera, CalibMatrix (12.3), SensorMatrix (12). The elements of this block are:

integer CurrentCamera - This is the current active camera.

real CalibMatrix(12,3)- This array holds up to three calibration matrices.

real SensorMatrix(12) - The current sensor matrix.

Subroutines available in VISION.FTN are:

SetCalibMatrix (CameraNo, CameraDataFile, error)

integer CameraNo

character CameraDataFile*(*)

logical error

This subroutine tells the PC to assign the camera parameters in "CameraDataFile" to camera No "CameraNo". The calibration matrix for that camera is copied across to the HP and stored in local common for use by other routines.

All the necessary Alessio commands are carried out automatically for you. If something goes wrong error will be set to .true.

SetSensorMatrix(CameraNo, PlaneDataFile)

integer CameraNo

character PlaneDataFile*(*)

This subroutine reads the specified Plane Data File, fits a plane through the data points, and then using the calibration matrix from the specified camera, generates a sensor matrix. The sensor matrix is placed in local common for use by other routines. The current camera No (also in local common) is set to "CameraNo".

xyzTOuv(xyz, uv)

real xyz(3), uv(2)

Converts word xyz coordinates to image uv coordinates using the calibration matrix for the current camera No.

uvTOxyz(uv, xyz)

real xyz(3), uv(2)

Converts image uv coordinates to world xyz coordinates using the current sensor matrix (the last one that was generated by SetSensorMatrix).

FindEdge(startxyz, endxyz, UpDown, edgexyz, error)

real startxyz(3), endxyz(3), edgexyz(3)

character UpDown

logical error

Search for an edge along a line starting from world coordinates startxyz and ending at endxyz (these are converted to search positions in image coordinates with the current calibration matrix). A "U" or a "D" is used to specify whether the expected edge is going to be "up" (from dark to light) or "down" (light to dark). The current edge detection parameters are used (set with an EPARM command to Alessio). The world coordinates of the first edge of magnitude greater than EdgeThresh is returned.

FindSpot (centrexyz, radius, BlackWhite, spotxyz, error)

real centrexyz (3), radius, spotxyz(3)

character BlackWhite

logical error

Search for a spot within a region centred on world coordinates centrexyz with approximate radius "radius" (these are converted to a search window in image coordinates with the current calibration matrix). A "B" or a "W" is used to specify whether the expected spot is going to be a dark spot on white or vice versa. The current spot detection parameters are used (set with a SPARM command to Alessio). The world coordinates of the centroid of the spot is returned.

The softward further includes measurement plane data files which specify the plane in which the vision measurements are assumed to be taken. They are used by subroutine SetSensorMatrix to generate a sensor matrix.

The file format is:

*File description, comments etc.

```
*File description, comments etc.

  x1 y2 z3        ¶ The xyz coordinates of three points in

  x2 y2 z2        ¶ the plane measurements are assumed to

  x3 y3 z3        ¶ be taken.
```

The software also includes a calibration process, the aim of which is to generate the calibration matrix for the camera. Basically the process is to take an image of the scene, pick out a number of points in the image for which we know their world xyz coordinates, and hence establish the transformation from world to image coordinates. There are 11 unknown values in the camera matrix (the 12th value is an arbitrary scaling factor, set to one). For each point in the image for which we know the world coordinates, we can generate two constraint equations, one each for the u and v coordinates. Thus we need at least six points in the image for which we know the world coordinates to be able to generate enough constraint equations to solve the 11 unknown values of the calibration matrix. In practice more than six points are used to provide greater accuracy and some protection against degeneracy in the constraint equations.

On SLAMP there are a series of points (currently eight) marked by small white squares. These are the calibration points. Their xyz world coordinate positions are stored in a calibration file, the standard one is /VISION/CALIB.DAT.

The origin is the spot on the crutch gauge in the deployed position. The world x axis runs along the axis of SLAMP towards the head end. The z axis runs vertically upwards. The points on one form of restraining device 9, known to SLAMP, that these calibration points correspond to is shown in Figure 5.

The calibration softward is accessed through the command interpreter AlexInt.

After entering the interpreter type

> calibrate

- You will then be asked whether you want to use a prestored image saved in a file or whether you want to take a new image. The image will be displayed on the graphics monitor.

- Enter the name of the calibration data file (CALIB.DAT), the coordinate points will be printed out on the screen.

- You will then be instructed to mark in turn each calibration point on the image using the cursor. The cursor is in fact a small white spot that is initially positioned in the centre of the screen. It is moved around by pressing the keys N(orth) S(outh) E(ast) W(est), to digitize the point type "X". The current image coordinates of the cursor are given when "M" is typed. The points must be digitized in the order of the calibration data file. A " + " is marked on each point as it is digitized.

- Once all the points have been digitized the calibration matrix is evaluated, as a check the xyz coordinates of the calibration data points are mapped into image coordinates using the calibration matrix. These points are marked with an "X", if they do not match up with the digitized points there is a problem. Possible problems could be that the points were not digitized in the correct order or that the constraint equations were degenerate.

- You are then asked to enter the name of the camera data file that the calibration matrix will be placed in. If the file already exists the old calibration matrix values in the file will be rewritten. If the files does not exist a new file is created and just the calibration data is written into it. You can then subsequently edit the camera data file to add the other camera parameters.

When recording an image one wants the gain and offset of the image digitizer set so that the digitized intensity levels in the image are distributed across the full range of values (0-255) as much as possible, and with minimal saturation at the limits. One also has to ensure that the camera is not saturating.

The camera exposure adjustment procedure is as follows. The cameras 3 and 4 are fitted with 8mm auto iris lenses. The auto iris is quite effective in coping with lighting changes. There are two adjustments one can make on the lens, overall level control, and relative response to average or peak brightness in the image. These should be set so that the image is as bright as possible with minimal saturation. See the lens operation notes for more information.

Also on the camera are gain and white balance level controls. The gain is generally set to some fixed level (currently 6dB), relying totally on the auto iris for adaption to lighting changes. The white balance seems to produce best results when set to "outdoors" as the fluorescent tubes we are using produce light with a wide and even spectral range.

PIP board gain 1 and offset settings are set in the following way. A routine has been written to automatically set the gain and offset of the image digitiser. The process involves snapping an image and generating a histogram of intensity levels in the image. The histogram is analysed to see how much of the image is saturated (at levels 0 or 255), or if not saturated, what are the darkest or lightest grey levels. The gain and offset are adjusted and the process is repeated iteratively until the image is satisfactory.

The exposure setting software is accessed through the command interpreter AlexInt.

>setexposure.

- An image is taken of the current scene with some initial settings for the gain and offset.
- You are asked to use the cursor to specify the opposite corners of a window in the image. This is the region from which the histogram wil be taken. The window should cover a representative portion of the image.
- The system then proceeds to adjust the gain and offset as best it can. You will see the image on the screen change and gradually improve.
- The final gain and offset settings are displayed on the screen.
- If necessary edit the gain and offset values in the relevant camera data file so that these values will be used every time that camera is "snapped".

Image files are denoted by the ending ".img". Images from a sheep are stored in their own directory, eg. /VISION/SHP123. This directory would be created with the DOS command >md /vision/shp123. Image file names within such a directory could be:

bellya.img - belly from above
bellys.img - belly from the side
side1a.img - side1 from above
side1s.img - side1 from the side
neck1a.img etc
backa.img
backs.img
side2a.img
side2s.img

plus any other position names desired.

The "a" ending on a file name indicates a view from above, the "s" indicating a view from the side.

The "scratch" directory for images is /VISION/SNAPS.

"Spot detection" is used to locate basic features in the scene such as calibration points, leg clamps C. head clamp, and the like to which highly direction retroreflective markers M are applied. Currently a crude form of spot, or "blob" detection is implemented. Basically the process is to scan through a particular region in the image looking for pixels belonging to the spot. The u and v image coordinates of each pixel in the spot are summed, and the average taken to return the centroid of the spot. Thresholding is used to decide whether a pixel is part of the spot or not. Depending on whether one is looking for a white spot on a dark background or vice-versa pixels are considered to be part of the spot if they are lighter than (or darker) than some predefined threshold value.

At the moment the "spots" on SLAMP are "white" spots generated by the highly retro-reflective markets M made from the material 3M Scotchlite 7615 which is used for front projection screens. This material reflects light directly back towards its source with a very narrow spread of the order of a half to one degree. The reflected light is very intense because of the minimal scattering. In order to be able to see the reflected light the light source and the light receiver (eye or camera) must be within a cone having an apex angle of roughly one degree and centred on the piece of reflective material. When one looks at the material it appears dark grey - it would only seem bright if we were to have a light source directly between one's eyes).

To enable the camera to see the spots effectively a 150W domestic light bulb L is placed beside the camera. This keeps the camera and light source within the one degree cone.

The retro-reflective material appears very bright -saturating the camera quite readily. This makes the selection of the detection threshold quite simple, a level just below the saturation level will ensure that only parts of the reflective material will be considered to be the spot.

One important advantage of this system is that it is totally passive, not needing any wires or power to be supplied to the "spots". The spots can be turned on and off simply by turning on or off the light source next to the camera. This is useful if one wants to ensure that the spots will not interfere wih other image features detection processes that may be used.

The spot detection routines available are:
Subroutine FindSpot in /v/vision.ftn on the HP.
FindSpot (centrexyz, radius, BlackWhite, spotxyz, error)
real centrexyz(3), radius, spotxyz(3)
character BlackWhite
logical error
Search for a spot within a region centred on world coordinates centrexyz with approximate radius "radius" (these are converted to a search window in image coordinates with the current calibration matrix). A "B" or a "W" is used to specify whether the expected spot is going to be a dark spot on white or vice versa. The current spot detection parameters are used (set with a SPARM command to Alessio). The world coordinates of the centroid of the spot is returned.
or through the SPOT command in ALEX
SPOT umin vmin umax vmax B(lack)/W(hite)
Search for a spot within the window specified by image coords umin, vmin, umax, vmax. A "B" or a "W" is used to specify whether the expected spot is going to be a black spot on white or a white spot on black. The current spot detection parameters are used. The image coordinates of the centroid of the spot is returned.

The edge detection task is made very much easier by the fact that we know before hand roughly where to expect edges and at what orientation these edges will be. Hence, rather than scanning the whole image looking for edges we need only to scan along lines of pixels in the regions where we expect edges to be, and in directions roughly perpendicular to the expected edge direction.

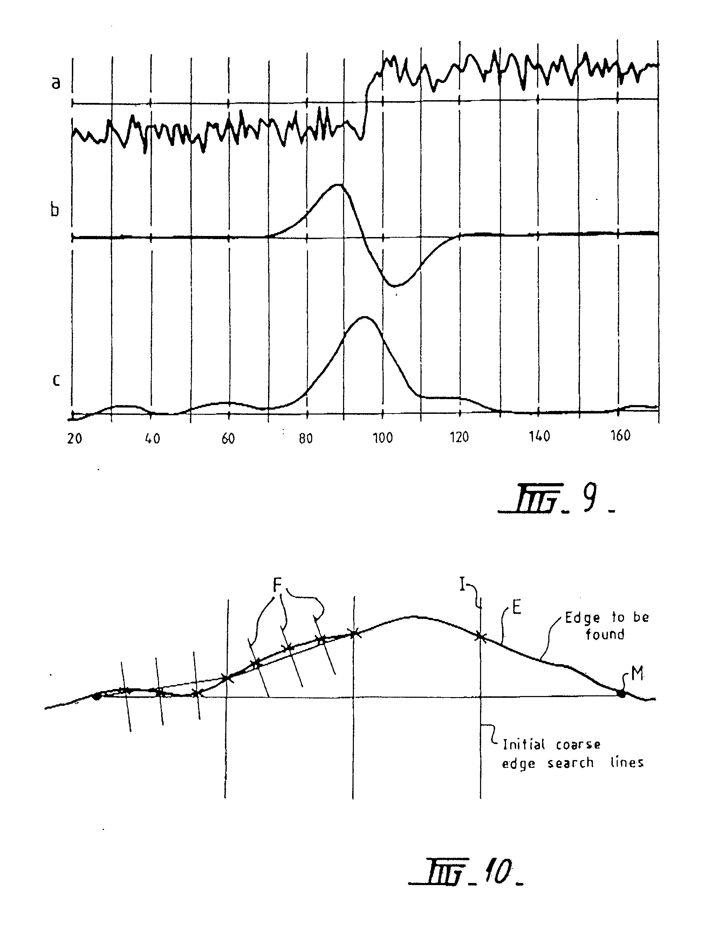

One scanning procedure is shown schematically in Figure 6 while typical intensity values are shown in Figure 7. It is not necessary to completely find the whole silhouette of the sheep, since only the boundary of the sheep at a few significant points needs to be known. In this manner the computation requirements can be reduced greatly and the IBM PC 2 is capable of doing the vision processing in an acceptable amount of time.

To find edges in the image we look for sharp changes in the intensity (ie. large derivatives/discontinuites). This is done numerically by convolving the image with a mask. If one was to consider the one dimensional trace of intensities as shown in Figure 7 the simplest mask one could use for this purpose is shown in Figure 8.

This mask has two "cells" one at -1 and the other at 1. It acts on two pixels in the image at any one time. To use the mask one "places it on the image" at some point and multiplies the intensity values that are "under" the mask by the corresponding values of the mask and the results added together. The mask is then indexed forwards by one pixel and the process is repeated. This particular mask simply takes the negative of one intensity value and adds it to the value of the adjacent pixel (ie. takes the difference between the two, and hence obtains the local slope). Edges in the image would be denoted by points where the local slope peaks (or bottoms out).

This mask is very sensitive to noise in the image and lots of false edges would be marked. To avoid this problem, the image is smoothed before trying to find peaks in the derivative of intensity. A Gaussian filter is typically used as it has the important property of having minimum support in both the spatial and frequency domains, though a simple moving average type filter is also quite effective.

A typical noisy signal is shown in (a) of Figure 9 while (b) and (c) respectively shown the signal after filtering and after convolution.

One can exploit the fact that taking the derivative of a mask and then convolving it with an image is equivalent to convolving an image with a mask and then taking its derivative. Thus, one can conveniently combine the smoothing and the taking of the derivative into one operation by convolving the image with a mask that is the derivative of a Gaussian.

As will be noted from Figure 9, such a mask is directional. For it to be able to detect an edge it must be indexed across the image so that it crosses the edge in a roughly perpendicular direction. In an arbitrary image where one would not know the rough positions and orientations of edges beforehand one would have to apply the mask to all points in the image at several orientations. Typically two orthogonal directions are used, but sometimes more. This results in a very large computational load to process even quite a small image. As mentioned above some prior knowledge of the position and orientation of edges can ease the computation requirements greatly. For a very comprehensive discussion on edge detection, the selection of masks and their use see Canny J.F. 1983, "Finding Edges and Lines in Images". Master of Science Thesis Massachusetts Institute of Technology, also Marr D.C. 1982. "Vision" Freeman, San Francisco.

The most common measure which determines whether an edge is significant or strong is the magnitude of the result of the convolution which is some combined measure of the intensity gradient and the magnitude of the intensity change. This may be some useful measure of the "strength" of an edge but alone is probably not a very good measure of the "significance" of an edge. For example, consider two squares on a white background, one black, and one grey. The edge strength around the black square will be greater than that around the grey square, but one would have to say that the significance of both sets of edges would be equally important. Significance of an edge might be some complex function of smoothness, continuity, sharpness, strength. While these parameters are all subjective to some degree, one should be able to devise some objective measures for them. However, at the moment we are using the strength of an edge given by the magnitude of the convolution result as the only measure of significance.

One modification that has been implemented is to allow the magnitude of the convolution result to be also made a function of the mean local intensity value. This modification is an attempt to allow one to emulate some of the behaviour of the human eye. The human eye is very much more sensitive to edges in low luminance conditions than in bright conditions. Thus two edges which might be marked as having equal strength numerically may be perceived to be quite different by the human eye. Edges that we see to be "important" may not be "calculated" to be important, which can be a source of frustration. To get around this a simple gain control has been implemented, the gain being made a linear function of the mean local intensity. The calculated edge strength at a particular pixel is determined by multiplying the convolution result by the gain at that point. In this way the sensitivity to dark and light edges can be manipulated.

The basic edge measurement strategy is to first locate a set of initial features such as the leg clamps and head clamp. These features are typically marking spots (blobs) that have been placed on the clamps. Having found these features one can then specify where, and in what direction, to search for edges, as shown in Figure 10. This specification for search areas and directions can be continued recursively. Line segments between found edge points can be subdivided to define new search positions and directions. In Figure 10, E represents the edge to be found, I indicates initial course edge search lines, F indicates finer edge search lines and M indicates the markers.

For the edge detection functions, the Alessio commands include:
Set Edge Detection Parameters

```
EPARM   sigma   EdgeThresh    GO     G255

          (6)      (60)      (40)    (0)    typical values
```

Set edge detection parameters.

Sigma sets the width of the marks that is used to convolve with the image.

EdgeThresh sets a value below which edges are not marked. GO and G255 are edge gain values, GO setting the gain for an edge with mean luminance 0, and G255 setting the gain for an edge with mean luminance 255. Linear interpolation is used for values in between.

EDGE ustart vstart uend vend U(p)/D(own)

Search for an edge along a line starting from image coords ustart, vstart and ending at uend, vend. A "U" or a "D" is used to specify whether the expected edge is going to be "up" (from dark to light or "down" (light to dark). The current edge detection parameters are used. The image coordinates of the first edge of magnitude greater than EdgeThresh is returned.

Edge Detection Subroutine available on the HP:

FindEdge(startxyz, endxyz, UpDown, edgexyz, error)

real startxyz(3), endxyz(3), edgexyz(3)

character UpDown

logical error

Search for an edge along a line starting from world coordinates startxyz and ending at endxyz (these are converted to search positions in image coordinates with the current calibration matrix). A "U" or a "D" is used to specify whether the expected edge is going to be "up" (from dark to light) or "down" (light to dark). The current edge detection parameters are used (set with an EPARM command to Alessio). The world coordinates of the first edge of magnitude greater than EdgeThresh is returned.

There is always room for improvement to be made to edge detection techniques. Aspects which may be investigated in the future include:

1. Find better ways of characterising the significance of an edge.

2. The Morrone-Owens edge detection scheme is of particular interest and will be tried when implementational details are more developed [Morrene M.C. and Owens R.A. 1986. "Feature Detection from Local Energy". Computer Science Research Report, University of Western Australia Morrone M.C. Ross J, Burr D.C. and Owens R.A. 1986. "Mach Bands are Phase Dependent". Computer Science Research Report 86/2, University of Western Australia]. This work indicates that the human eye perceives edges where there is phase congruency at zero degrees in the image (rather than where there are very large intensity gradients).

3. Colour edge detection. When colour image digitizing is available one will have extra information for detecting edges. However, this gives rise to the question how one distinguishes one colour from another, what is the "difference" between two colours.

## Claims

1. A system for estimating the size and/or shape and/or position of an object comprising at least a first optical system positioned to be aimed at the object from a predetermined direction so as to receive an image of the object from that direction, means for locating one or more bright spots at predetermined positions on or adjacent said object, means for digitizing the image received by said optical system into a predetermined array of intensity values across the image, means for storing the digitized image, and means for searching the stored digitized image to locate said bright spot(s) and then to locate changes in intensity in the image indicating the location of the edges of the object.

2. The system of claim 1, further comprising a second optical system positioned to receive an image of said object from another direction.

3. The system of claim 1 or 2, wherein said bright spots are produced by elements of highly directional retro-reflective material positioned on or near the object in combination with a light source positioned adjacent the or each optical system.

4. The system of claim 3, wherein said light source and said optical system are positioned within a cone of the order of one degree.

5. The system of claim 1, wherein said means for searching the stored digitized image includes means for scanning through a particular region of the digitized image for pixels belonging to a bright spot, means for summing the image coordinates of each pixel so located, means of averaging the summation to provide the coordinates of the centroid of said bright spot.

6. The system of claim 5, wherein pixels belonging to a bright spot are detected by means for determining whether the light energy threshold of a particular pixel exceeds a predetermined threshold which lies at a level just below the saturation level of the optical system to thereby avoid sensitivity to ambient lighting conditions.

7. The system of claim 6, wherein the or each optical system includes a video camera and said threshold is set just below the saturation level of said video camera.

8. The system of claim 1, wherein said means for locating changes in intensity in the image indicating the location of edges of the object comprises means for locating a step change in the intensity of the digitized image, means for filtering the intensity signal in this region, and means for convolving the filtered signal to produce a peak identifying an edge of the object.

9. The system of claim 1, wherein said means for digitizing the image received by said optical system comprises a video digitizer board connected to a suitable computer, said video digitizer board having associated software which performs the required searching for bright spots and the location of changes in intensity in the image indicating the location of an edge of the object.

10. The system of claim 1, wherein said bright spots are attached to means for restraining a sheep in a predetermined position.

_FIG. 1._

_FIG. 2._

INPUT

G

V

-12-

-13-

-14-

0    255

255

-15-

(0,0)

0    2

1    3

(1023,1023)

-17-

-16-

-28-

-18-

DAC  -22-

-19-

DAC  -23-

-20-

DAC  -24-

_Fig. 3._

EP 0 322 314 A2

# FIG. 4.

**IBM PC-XT**

Alex Int

Interpreter → Vision Control & Measurement Software ↔ Image

command | positions of features in image u,v, coords

Camera Data File → Vision Control & Measurement Software

Calibration Data File → Vision Control & Measurement Software

Command Interpreter | Alessio | Alex | Access to Alessio on the P.C.

Protocol Handler | HPAlex

command | data - image u.v. coords

RS 232 link

**HPA 900**

PC Talk

Protocol Handler | Alex | Access to Alessio on the H.P.

common /VISDATA/

Calibration & Sensor Matricles → Convert Search posn. in x,y,z to Image u,v Coords | Convert u,v coords to x,y,z

Measurement Plane Data File → Convert Search posn. in x,y,z to Image u,v Coords

Measurement Requestor

sheep measurement data x,y,z world coords

Prediction Software

FIG.5.

EP 0 322 314 A2

$\overline{\text{FIG}}.\ 6$

A

B

$\overline{\text{FIG}}.\ 7.$

INTENSITY

SHEEP (wool)

Dark background

A                                                    B

$\overline{\text{FIG}}.\ 8.$

a

b

c

20    40    60    80    100    120    140    160

$\overline{HG}$ _ 9 _

F        I    E        Edge to be
                      found

                                M

Initial coarse
edge search lines

$\overline{HG}$ _ 10 _